# EUROPEAN PATENT SPECIFICATION

(11) **EP 0 931 453 B1**
(45) Date of publication and mention of the grant of the patent: **15.05.2002**
(21) Application number: 99200238.6
(22) Date of filing: 27.01.1999
(51) Int. Cl.: A01J 25/11, A01J 25/12

(54) **Process and apparatus for transferring a curd block obtained from a drainage column to a cheese vessel**
Verfahren und Vorrichtung zum Übertragen eines durch eine Entwässerungskolonne hergestellten Molkenblockes zu einem Käsefass
Procédé et appareillage pour transférer un bloc de caillé obtenu à partir d'une colonne d'égouttage vers un récipient à fromage

(30) Priority: 28.01.1998 NL 1008151
(43) Date of publication of application: 28.07.1999
(73) Proprietor: Tetra Laval Holdings & Finance S.A., 1009 Pully (CH)
(72) Inventor: Schouten, Frank, 8435 WR Donkerbroek (NL); Zantinge, Jan, 9207 CC Drachten (NL)
(74) Representative: Ottevangers, Sietse Ulbe

(56) References cited:
- EP-A- 0 235 867
- EP-A- 0 336 649
- GB-A- 2 125 674

## Description

The invention relates to a process for transferring a curd block obtained from a drainage column to a cheese vessel, which comprises periodically lowering a curd column present in the drainage column into a case by means of a metering cylinder provided with a supporting member, cutting off a curd block at the bottom side of the curd column, and moving the case with the curd block therein sidewards.

The invention further relates to an apparatus for using the process.

In the known process and apparatus a bottomless case is used. The supporting member with the cut-off curd block thereon is lowered to just below the lower edge of the case. Then the case with the curd block just formed therein is moved sidewards over the supporting member to above a gate plate. The gate plate opens when a cheese vessel is present below the gate plate. The curd block falls into the cheese vessel and can then be conveyed on for further operations, such as a pressing operation.

It is a drawback of this known technique that the displacement of the curd block over the supporting member and over the gate plate as well as over the junctions between the supporting member and the gate plate and the movement of the gate plate may cause damage to the bottom side of the curd block. This damage remains visible in the finally obtained cheese and is experienced as an annoying defect.

This problem increases according as the weight of the curd blocks is greater. There is a tendency to cut off heavier blocks being 40 kg and more in weight. With such heavy blocks not only the above problems occur but also the problem that the height of fall of the block from the gate plate to the bottom of the cheese vessel may also cause damage and/or deformation of the curd block and therefore of the final cheese.

It is an object of the invention to remove the above drawbacks and, in general, to provide an efficient and safe method of transferring a curd block from the bottom side of a curd column to a cheese vessel. To this end, a process of the above type is characterized according to the invention in that the case is a transfer vessel with a bottom that can be moved up and down; that the transfer vessel, after being filled with a curd block, is moved sidewards into a transfer position in a station.

An apparatus for transferring a curd block obtained from a drainage column to a cheese vessel, which comprises periodically lowering a curd column present in a drainage column into a case by means of a supporting member; cutting off a curd block at the bottom side of the curd column, and moving the case with the curd block therein sidewards, is characterized according to the invention in that the case is a transfer vessel with a bottom that can be moved up and down by means of a metering cylinder; that means are provided for moving a filled transfer vessel sidewards into a transfer position in a station.

The invention will hereinafter be explained in more detail with reference to the accompanying drawings, in which:
Fig. 1 diagrammatically shows an example of a known curd drainage apparatus;
Fig. 2 diagrammatically illustrates the steps of the known apparatus in steps A through H;
Figs. 3 through 8 diagrammatically show an example of a process and apparatus according to the invention;
Figs. 9 through 12 diagrammatically show another example of the invention;
Fig. 13 diagrammatically shows a detail of an example of embodiment of a detail of a transfer vessel or a cheese vessel for use according to the invention; and
Fig. 14 diagrammatically illustrates yet another example of the invention.

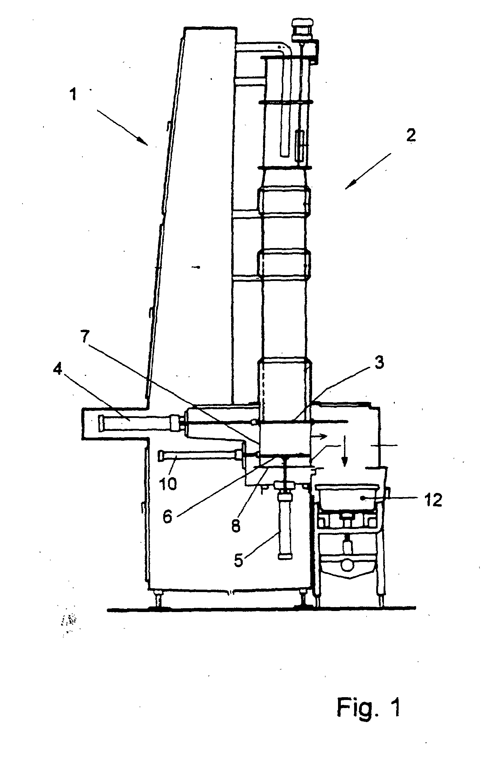

Fig. 1 diagrammatically shows an example of a known curd drainage apparatus 1. The apparatus shown has a drainage column 2, into which, in operation, a whey-curd mixture is fed at the top side. Thus a curd column is formed in the drainage column 2. The whey can flow off via a perforated wall or perforated wall portions. Provided at the bottom side of the curd column is a guillotine blade 3, which is operated by a cylinder 4, and by means of which a curd block is cut from the curd column at regular times.

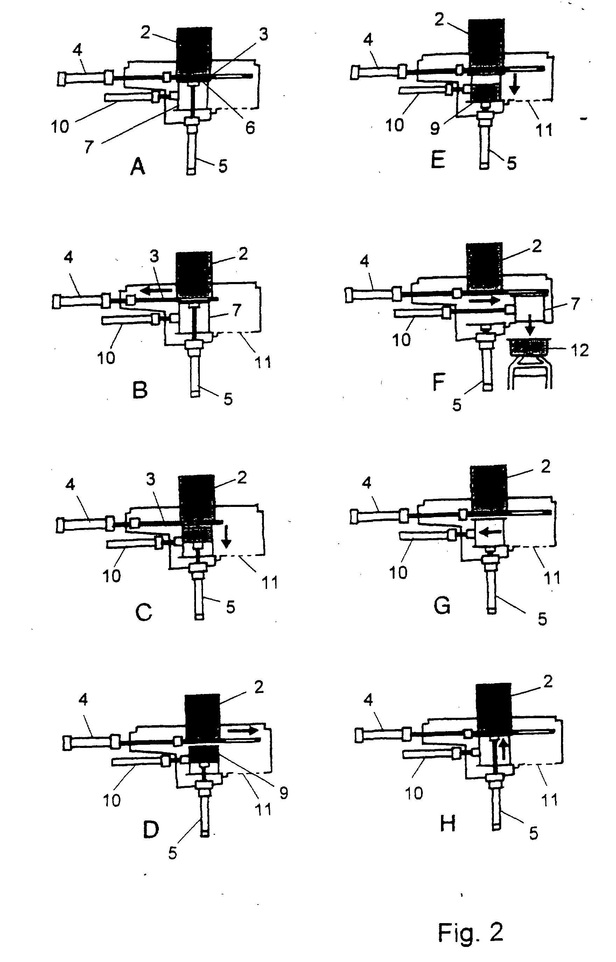

To this end, a supporting platform 6 is moved up by means of a cylinder 5 until the height of the blade 3 (Fig. 2A). When the blade is in the open position (Fig. 2B), the curd column, while supported by the supporting platform, can be lowered by means of a suitable control of the cylinder 5. The curd column then sinks into a bottomless case 7, also referred to as sliding cartridge (Fig. 2C).

In the drawings (Fig. 1, Fig. 2C) the supporting platform is still at a small distance above the lowest position indicated by 8. As soon as the supporting platform with the curd column thereon has reached a position corresponding to the desired height of the curd block 9 to be formed, the lowermost part of the curd column is cut off by means of the blade 3 (Fig. 2D). Subsequently, the supporting platform with the curd block thereon is brought into the lowest position (Fig. 2E). When the supporting platform is in the lowest position, the sliding cartridge 7 is moved sidewards by means of a cylinder 10 (in the Figures to the right) (Fig. 2F). The curd block 9 thus slides over the piston onto a gate plate 11. When a cheese vessel is present under the gate plate, as diagrammatically indicated by 12 in Fig. 2F, the gate plate opens and the curd block falls into the cheese vessel. The sliding cartridge 7 is then withdrawn by the cylinder 10, while the filled cheese vessel 12 is discharged (Fig. 2G). Subsequently, the supporting platform moves up again (Fig. 2H), and the cycle can be repeated.

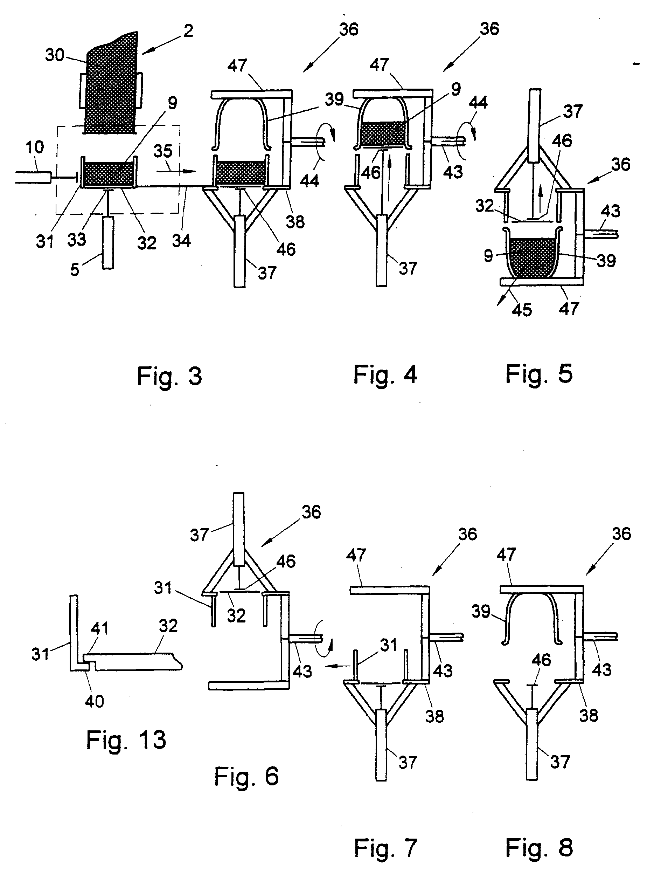

Figs. 3 through 8 illustrate a first example of a process and apparatus according to the invention. It is observed that drainage columns are known in various embodiments. The invention is not limited to the use with one specific type of drainage column or drainage apparatus.

In Figs. 3 through 8, the same reference numerals are used for corresponding parts as in Figs. 1 and 2.

Fig. 3 shows a curd block 9 cut from a curd column 30, received within a transfer vessel 31 with a bottom 32 that can be moved up and down by means of a cylinder 5, in a similar manner as described above for the known technique. However, an important difference is that the transfer vessel 31, unlike the above-described case or sliding cartridge, has a bottom 32, which, true, can be moved up and down like the supporting member 6, but which in the lowest position remains coupled to the transfer vessel, in the sense that the bottom, together with the rest of the vessel and the curd block contained therein, can be moved from the piston 33 of the cylinder 5 and sidewards over a supporting surface 34, as indicated by an arrow 35 in Fig. 3. The bottom side of the curd block now does not itself slide over a supporting surface and is therefore not damaged.

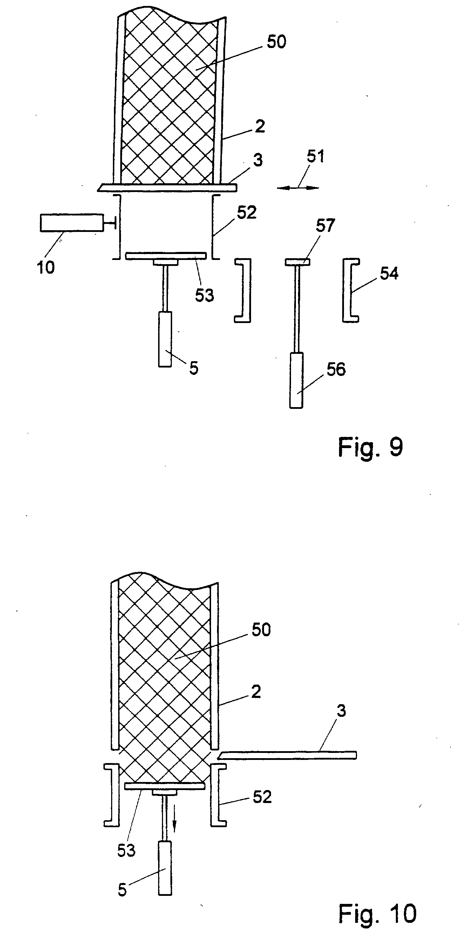

The transfer vessel may have perforated or unperforated walls and/or a perforated or unperforated bottom. The walls may further be smooth at the inner side or be provided with grooves. If desired, the walls may be provided at the lower side with means for preventing the bottom from falling out of the vessel. To this end, the walls could be provided *e.g*. with a narrow inwardly directed flange, as indicated by 40 in Fig. 9, on which the bottom 32 rests. If required, the bottom may be provided with a circumferential shoulder 41 so as to form a smooth bottom side of the transfer vessel. However, the bottom may also be loose in the transfer vessel without being connected to the transfer vessel. It is important that the curd block is moved while lying on the bottom.

The transfer vessel filled with a curd block is slid according to the invention into a reversing device 36. The reversing device 36 comprises a cylinder 37, which can act on the bottom 32 of the vessel, when the vessel is in a transfer position on a platform 38 of the reversing device, as shown in the right-hand part of Fig. 3. In the transfer position the transfer vessel 31 is above the cylinder 37 and below a reversed cheese vessel 39.

The bottom 32 of the vessel 31 is now moved up by the cylinder 37 until the curd block 9 is completely or largely in the reversed cheese vessel 39, as shown in Fig. 4. The complete reversing device 36 is now rotated about a horizontal axis through 180°, as diagrammatically indicated by 43 with a curved arrow 44. The reversed position of the reversing device 36 is shown in Fig. 5. During the rotation the curd block already begins to slide into the cheese vessel 39 after a rotation through 90° or more. In the reversed position the curd block completely sinks into the cheese vessel which is now in the normal position and can be discharged as indicated by an arrow 45 in Fig. 5.

To prevent the bottom 32 of the transfer vessel 31 from falling on the curd block in the cheese vessel, a temporary coupling between the piston 46 of the cylinder 37 and the bottom 32 can be applied. The piston may be connectable to the bottom by vacuum or mechanically. To this end, the piston may be provided *e.g*. with a suction cup that can be energized by reduced pressure or *e.g*. with parts of a bayonet catch, which cooperate with counterparts at the bottom.

By way of alternative, it is possible to provide the bottom *e.g*. with lateral projections or the like, which prevent the bottom from falling out of the cheese vessel.

After the curd block has been taken over by the cheese vessel and the cheese vessel has been discharged, the reversing device can be rotated into the starting position again. The bottom is then also moved again to the lower side of the transfer vessel by the cylinder 37. This may take place during and/or preceding and/or following the rotating-back movement. According to the process shown, the bottom is withdrawn first (Fig. 6). Fig. 7 shows the reversing device 36 in the rotated-back position, in which the transfer vessel is in the usual position again. From the position shown in Fig. 7 the transfer vessel can be slid back by known per se means, not shown, to under the drainage column, whether or not via a bypass and/or a cleaning station. Subsequently, the reversing device 36 is provided again with a reversed cheese vessel 39 (Fig. 8), and the cycle can be repeated.

The transfer vessel 31 must be temporarily coupled to the reversing device in order not to fall out of the reversing device in the reversed position. Similarly, the cheese vessel 39 must be temporarily coupled to the reversing device. To this end, the reversing device may be provided with mechanical clamping means or with clamping means operating by vacuum. Also, use could be made of *e.g*. flanges at the transfer vessel and/or the reversing vessel, which engage the platform 38 or the carrier 47 for the cheese vessels under strips or the like.

It is observed that, if desired, the reversing device may be arranged to transfer the contents of more than one transfer vessel simultaneously to a corresponding number of cheese vessels.

Figs. 9 through 12 diagrammatically show a second example of a process and apparatus according to the invention. Fig. 9 diagrammatically shows the lowermost end of a drainage column 2 of a curd drainage apparatus. The drainage column contains a curd column 50. The curd column 50 rests on a guillotine blade 3, which closes the drainage column 2 and can be moved forward and backward in the manner indicated by an arrow 51 to close or release the drainage column and to cut off the lowermost part of a curd column 50 sunk from the drainage column, in a similar manner as described above.

In Fig. 9 the situation is such that the guillotine blade is in the closed position and that an empty transfer vessel 52 is present under the guillotine blade.

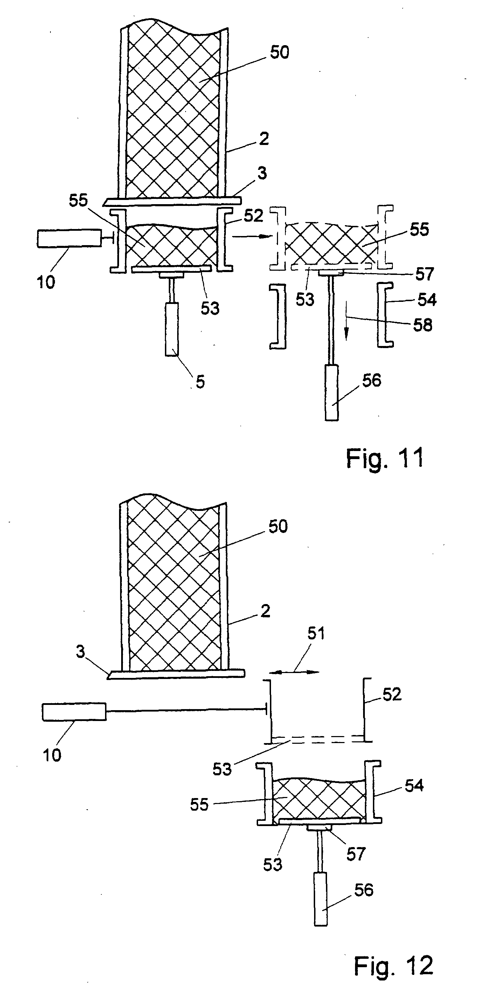

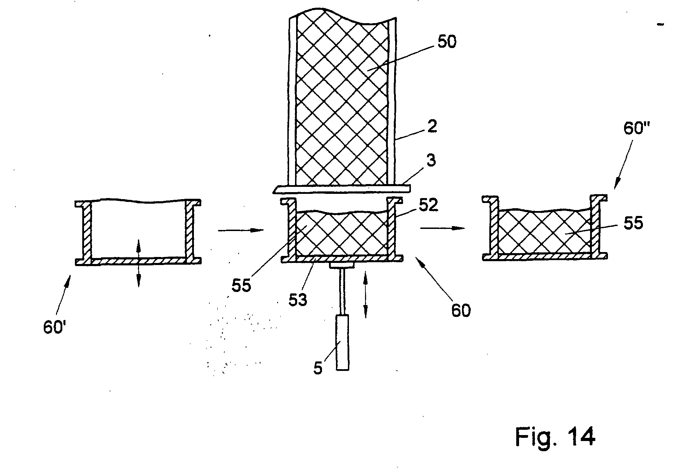

When a transfer vessel is present under the drainage column, the movable bottom 53 is moved up in the usual manner by means of a cylinder 5. When the bottom is exactly under the guillotine blade, the guillotine blade can be withdrawn, as soon as the drainage process of the curd column 50 has meanwhile made sufficient progress. When the guillotine blade has been withdrawn, the curd column 50 is supported by the bottom 53, which then sinks in the known manner (Fig. 10) until a cheese block of the desired height can be cut off. The guillotine blade is then brought into the closed position again, in which a cheese block 55 is cut off and the bottom 53 sinks further until it is at the height of the lower edge of the transfer vessel, as shown in Fig. 11. The transfer vessel 52 may then be moved sidewards to above a cheese vessel 54. In this position, indicated in Fig. 11 by broken lines, the bottom 53 is supported by the piston 57, which then sinks, as indicated by an arrow 58, until the bottom 53 and the cheese block 55 are in the cheese vessel 54 and the situation shown in Fig. 12 has been realized. After the cheese vessel 54 has been filled with a cheese block 55, the filled cheese vessel is discharged by means of suitable discharge means (not shown) and an empty cheese vessel 54 conveyed into the position of the filled cheese vessel shown in Fig. 12. Subsequently, the movable bottom 53 is moved up by means of the cylinder 56 until a level corresponding to the lower side of the transfer vessel which is still (or again) in the place shown in Fig. 12, as indicated in Fig. 12 by broken lines. The transfer vessel 52 is then moved again, together with the bottom 53, to under the drainage column 2, as shown in Fig. 9. The piston 57 then preferably remains in the high position, as likewise shown in Fig. 9. Unlike in the example of embodiment described before, the cheese vessels have a bottom that can be moved up and down, while the transfer vessel has no bottom of its own. The bottoms of the cheese vessels that can be moved up and down each time function as a temporary bottom for the transfer vessel. The temporary bottom can move sidewards with the transfer vessel. In Fig. 12 the movable bottom 53 is indicated by broken lines in the position in which the movable bottom cooperates with the transfer vessel. In the position indicated by full lines, the bottom 53 forms the bottom of the cheese vessel 54. Furthermore, diagrammatically shown at 56 is a cylinder with piston 57 for moving the bottom up and down. The bottom 52 must be able to pass the lower edge of the transfer vessel without hindrance. However, in a similar manner as shown in Fig. 13, the cheese vessels 54 may be arranged in a manner such that the bottom 53 can be supported at the level of the lower edge of the cheese vessel.

According to yet another elaboration on the inventive concept, by using cheese vessels with a bottom that can be moved up and down, as described above, the cut-off curd blocks can be collected in the cheese vessels directly under the drainage column. A separate transfer vessel is not required, then. For completeness' sake, such a process is diagrammatically shown once more in Fig. 14.

Fig. 14 shows a drainage column 2 with a curd column 50 therein. Provided under the drainage column is a case 52 with a bottom 53 that can be moved up and down. In this example, however, the case 52 is not a part of a transfer vessel, but the case forms the side wall of a cheese vessel 60 which has a movable bottom 53. Positioned to the left of the cheese vessel 60 is an empty cheese vessel 60', which can take the place of the cheese vessel 60, as soon as the cheese vessel 60 has been moved from under the drainage column, *e.g.* into the position indicated at 60". A difference between a transfer vessel and a cheese vessel is that the cheese in a cheese vessel is subjected to a subsequent treatment, *e.g*. is pressed, that from a structural viewpoint a cheese vessel therefore must comply with more stringent requirements than a transfer vessel.

The cheese vessels can be supplied with a supply conveyor and discharged with a discharge conveyor. In this connection, push cylinders may be provided, similar to *e.g*. the cylinder 10 of Fig. 9, to place the cheese vessels under the drainage column and/or move them from under the drainage column. It is also possible to use an intermittently driven continuous conveyor, provided that the conveyor offers possibilities, *e.g*. openings in the conveyor surface, to allow the cylinder 5 to cooperate with the movable bottoms of the cheese vessels.

It is observed that after the foregoing various modifications are obvious to those skilled in the art. Thus, for instance, the process described may be used both for columns with a single curd column and for columns with several curd columns within one case. In the latter case, either one curd block or more than one curd block can be cut off simultaneously in a single cutting operation. Also for moving and retaining the transfer vessel and the cheese vessels different solutions are conceivable. These and similar modifications are deemed to fall within the scope of the invention.

## Claims

1. A process for transferring a curd block obtained from a drainage column to a cheese vessel, which comprises periodically lowering a curd column present in the drainage column into a case by means of a supporting member, cutting off a curd block at the bottom side of the curd column, and moving the case with the curd block therein sidewards,
**characterized by** using a supporting member which comprises a bottom that can be moved up and down, which cooperates with the case in such a manner that the case, after being filled with a curd block, can be moved sidewards, while the curd block remains on the movable bottom during movement.

2. A process according to claim 1, **characterized in that** the case is a transfer vessel with a bottom that can be moved up and down, and that the transfer vessel, after being filled with a curd block, is moved sidewards into a transfer position in a transfer station, said curd block remaining on the movable bottom during movement.

3. A process according to claim 2, **characterized in that** the transfer station is a reversing station, and that in the reversing station above the transfer position of the transfer vessel a cheese vessel is placed in the reversed position, that the bottom of the transfer vessel is moved up until the curd block at least partly extends into the cheese vessel, that, subsequently, the reversing station is rotated about a horizontal axis until the cheese vessel is in the normal position, following which the cheese vessel is discharged, and that the reversing station and the bottom of the transfer vessel is returned again to the starting position, and that, finally, the transfer vessel is removed from the reversing station.

4. A process according to claim 2 or 3, **characterized in that** the transfer vessel is returned to a drainage column via a bypass of the reversing station.

5. A process according to claim 2, **characterized in that** in the transfer station the curd block lying on the movable bottom is transferred to a ready cheese vessel, and that the cheese vessel with the curd block lying therein on the movable bottom is then discharged from the transfer station and the transfer vessel is returned to the drainage column.

6. A process according to claim 5, **characterized in that** the movable bottom for transferring a curd block from a transfer vessel to a cheese vessel is moved down from the transfer vessel into a bottomless cheese vessel present under the transfer vessel.

7. A process according to claim 1, **characterized in that** the case used is a cheese vessel with a movable bottom which is filled with a curd block directly under the drainage column, said cheese vessel forming part of a number of similar cheese vessels which are successively supplied to a drainage column, and which, after being filled with a curd block, are each conveyed by means of suitable conveying means to at least one transfer station for further processing of the curd block, said curd block always remaining supported by the movable bottom of a cheese vessel.

8. An apparatus for transferring a curd block obtained from a drainage column to a cheese vessel, which comprises periodically lowering a curd column present in the drainage column into a case by means of a supporting member, cutting off a curd block at the bottom side of the curd column, and moving the case with the curd block therein sidewards, **characterized in that** the supporting member comprises a bottom that can be moved up and down by means of a metering cylinder, and that means are provided for moving sidewards a filled case together with the movable bottom and a curd block lying thereon.

9. An apparatus according to claim 8, **characterized in that** the case is a transfer vessel with a bottom that can be moved up and down, and that said means for moving the case sidewards are arranged to move the case together with the_ movable bottom and a curd block lying thereon sidewards into a transfer position in a transfer station which comprises at least one transfer position.

10. An apparatus according to claim 9, **characterized in that** the transfer station is a reversing station which comprises means for placing a cheese vessel in the reversed position above the transfer position, that the reversing station further comprises means for moving up the bottom of the transfer vessel with a curd block thereon until the curd block at least partly extends into the cheese vessel, and that rotation means are provided to bring the reversing station into the reversed position with the cheese vessel below and the transfer vessel above so that the curd block can slide into the cheese vessel.

11. An apparatus according to claim 10, **characterized in that** the means for moving up the bottom of the transfer vessel comprise a cylinder mounted in the reversing station with a piston acting on the bottom of the transfer vessel.

12. An apparatus according to claim 11, **characterized in that** the piston comprises coupling means for effecting a temporary coupling with the bottom of the transfer vessel.

13. An apparatus according to claim 12, **characterized in that** the coupling means operate by vacuum.

14. An apparatus according to claim 12, **characterized in that** the coupling means effect a temporary mechanical coupling.

15. An apparatus according to claim 14, **characterized in that** the coupling means effect a bayonet catch.

16. An apparatus according to any of claims 10 through 15, **characterized in that** the reversing station is arranged for rotation about a horizontal axis.

17. An apparatus according to any of claims 10 through 16, **characterized in that** the reversing station comprises retaining means for a cheese vessel and for a transfer vessel.

18. An apparatus according to claim 17, **characterized in that** the retaining means comprise clamping means.

19. An apparatus according to claim 17 or 18, **characterized in that** the retaining means comprise rail-like members that can engage around flanges of a cheese vessel and/or transfer vessel.

20. An apparatus according to claim 9, **characterized by** transfer means arranged to remove the movable bottom with the curd block lying thereon from a transfer vessel and place it in a cheese vessel.

21. An apparatus according to claim 20, **characterized in that** the transfer means comprise a cylinder provided with a piston, said cylinder being arranged to support the movable bottom and move it down from the transfer vessel into a cheese vessel placed under the transfer vessel.

22. An apparatus according to claim 21, **characterized in that** the movable bottom, after being transferred to a cheese vessel, forms the bottom of the cheese vessel.

23. An apparatus for forming curd blocks and discharging them in cheese vessels, comprising a drainage apparatus with one or more drainage columns, which each comprise one or more drainage tubes, **characterized by** an apparatus for transferring curd blocks as described in one of claims 8 through 22.

24. An apparatus according to claim 23, **characterized by** a bypass for returning emptied transfer vessels.

25. An apparatus according to claim 24, **characterized in that** the bypass leads along a cleaning station.

26. An apparatus according to claim 8, **characterized in that** the case is a cheese vessel with a movable bottom, said cheese vessel forming part of a number of similar cheese vessels which are successively supplied to a drainage column by means of suitable supply means, each to be filled with a curd block directly under the drainage column, and which, after being filled, are each conveyed by means of suitable discharge means to at least one processing station for further processing of the curd block, while the curd block lies in the cheese vessel on the movable bottom of the cheese vessel.

27. An apparatus according to claim 26, **characterized in that** the supply means and the discharge means are formed by a continuous conveyor.

## Patentansprüche

1. Verfahren zum Übertragen eines aus einer Entwässerungskolonne erhaltenen Molkeblockes zu einem Käsefass, wobei das Verfahren das periodische Absenken einer in der Entwässerungskolonne vorhandenen Molkesäule in einen Behälter mittels eines Aufnahmeelementes, das Abschneiden eines Molkeblockes auf der Unterseite der Molkesäule, und das Seitwärtsbewegen des Behälters mit dem darin befindlichen Molkeblock aufweist,
**gekennzeichnet,**
**durch** die Verwendung eines Aufnahmeelementes, welches einen Boden aufweist, der aufwärts und abwärts bewegt werden kann, welches mit dem Behälter derart zusammenwirkt, dass der Behälter nach der Füllung mit dem Molkeblock seitwärts bewegt werden kann, während der Molkeblock auf dem beweglichen Boden während der Bewegung verbleibt.

2. Verfahren nach Anspruch 1,
**dadurch gekennzeichnet,**
**dass** der Behälter ein Übertragungsfass mit einem Boden ist, der aufwärts und abwärts bewegt werden kann und das Übertragungsfass nach der Füllung mit dem Molkeblock seitwärts in eine Übertragungsposition in einer Übertragungsstation bewegt wird, wobei der Molkeblock während der Bewegung auf dem beweglichen Boden verbleibt.

3. Verfahren nach Anspruch 2,
**dadurch gekennzeichnet,**
- **dass** die Übertragungsstation eine Umkehrstation ist, und
- **dass** in der Umkehrstation oberhalb der Übertragungsposition des Übertragungsfasses ein Käsefass in der Umkehrposition platziert ist,
- **dass** der Boden des Übertragungsfasses aufwärts bewegt wird bis der Molkeblock sich wenigstens teilweise in das Käsefass erstreckt,
- **dass** anschließend die Umkehrstation um ihre horizontale Achse gedreht wird, bis das Käsefass in der Normalstellung ist, worauf danach dass Käsefass entladen wird, und
- **dass** die Umkehrstation und der Boden des Übertragungsfasses wieder in die Startposition zurückgeführt werden, und
- **dass** letztlich das Übertragungsfass aus der Umkehrstation entfernt wird.

4. Verfahren nach Anspruch 2 oder 3,
**dadurch gekennzeichnet,**
**dass** das Übertragungsfass zu einer Entwässerungskolonne mittels eines Nebenweges aus der Umkehrstation zurückgeführt wird.

5. Verfahren nach Anspruch 2,
**dadurch gekennzeichnet,**
- **dass** in der Übertragungsstation der auf dem beweglichen Boden liegende Molkeblock zu einem bereiten Käsefass übertragen wird, und
- **dass** das Käsefass mit dem darin auf dem beweglichen Boden liegenden Molkeblock dann aus der Übertragungsstation entlassen wird und das Übertragungsfass dann zur Entwässerungskolonne zurückgeführt wird.

6. Verfahren nach Anspruch 5,
**dadurch gekennzeichnet,**
**dass** der bewegliche Boden zum Übertragen des Molkeblockes aus dem Übertragungsfass zu einem Käsefass abwärts aus dem Übertragungsfass in ein bodenfreies Käsefass bewegt wird, das sich unter dem Übertragungsfass befindet.

7. Verfahren nach Anspruch 1,
**dadurch gekennzeichnet,**
**dass** der verwendete Behälter ein Käsefass mit einem beweglichen Boden ist, welches mit einem Molkeblock direkt unter der Entwässerungskolonne gefüllt ist, wobei das Käsefass einen Teil einer Anzahl von ähnlichen Käsefässern bildet, die aufeinanderfolgend zu einer Entwässerungskolonne zugeführt werden und welche nach der Füllung mit einem Molkeblock jeweils mittels geeigneter Fördereinrichtungen zu wenigstens einer Übertragungsstation zur weiteren Verarbeitung des Molkeblockes befördert werden, wobei der Molkeblock stets von dem beweglichen Boden des Käsefasses unterstützt verbleibt.

8. Vorrichtung zur Übertragung eines aus einer Entwässerungskolonne erhaltenen Molkeblocks zu einem Käsefass, welche das periodische Absenken einer in der Entwässerungskolonne vorhandenen Molkesäule in einen Behälter mittels eines Unterstützungselementes, das Abschneiden eines Molkeblockes von der Unterseite der Molkesäule, und das Seitwärtsbewegen des Behälters mit dem darin befindlichen Molkeblock aufweist,
**dadurch gekennzeichnet,**
- **dass** das Aufnahmeelement einen Boden aufweist, der mittels eines Messzylinders aufwärts und abwärts bewegt werden kann, und
- **dass** eine Einrichtung zum Seitwärtsbewegen eines gefüllten Behälters zusammen mit dem beweglichen Boden und einem darauf liegenden Molkeblock vorgesehen ist.

9. Vorrichtung nach Anspruch 8,
**dadurch gekennzeichnet,**
- **dass** der Behälter ein Übertragungsfass mit einem Boden ist, der aufwärts und abwärts bewegt werden kann und
- **dass** die Einrichtung zum Seitwärtsbewegen angeordnet ist, um den Behälter zusammen mit dem beweglichen Boden und einem darauf liegenden Molkeblock seitwärts in eine Übertragungsposition in einer Übertragungsstation zu bewegen, die wenigstens eine Übertragungsposition aufweist.

10. Vorrichtung nach Anspruch 9,
**dadurch gekennzeichnet,**
- **dass** die Übertragungsstation eine Umkehrstation ist, welche eine Einrichtung zum Platzieren eines Käsefasses in der Umkehrposition oberhalb der Übertragungsposition aufweist,
- **dass** die Umkehrstation außerdem eine Einrichtung aufweist, um den Boden des Übertragungsfasses mit einem Molkeblock darauf aufwärts zu bewegen, bis der Molkeblock wenigstens teilweise sich in das Käsefass erstreckt, und
- **dass** eine Rotationseinrichtung vorgesehen ist, um die Umkehrstation in die Umkehrposition mit dem Käsefass unten und dem Übertragungsfass darüber zu bringen, so dass der Molkeblock in das Käsefass gleiten kann.

11. Vorrichtung nach Anspruch 10,
**dadurch gekennzeichnet,**
**dass** die Einrichtung zum Aufwärtsbewegen des Bodens des Übertragungsfasses einen in der Umkehrstation befestigten Zylinder mit einem Kolben aufweist, der auf den Boden des Übertragungsfasses wirkt.

12. Vorrichtung nach Anspruch 11,
**dadurch gekennzeichnet,**
**dass** der Kolben eine Kopplungseinrichtung zum Bewirken eines temporären Koppelns mit dem Boden des Übertragungsfasses aufweist.

13. Vorrichtung nach Anspruch 12,
**dadurch gekennzeichnet,**
**dass** die Kopplungseinrichtung mittels Vakuum arbeitet.

14. Vorrichtung nach Anspruch 12,
**dadurch gekennzeichnet,**
**dass** die Kopplungseinrichtung eine temporäre mechanische Kopplung bewirkt.

15. Vorrichtung nach Anspruch 14,
**dadurch gekennzeichnet,**
**dass** die Kopplungseinrichtung einen Bajonettverschluss bewirkt.

16. Vorrichtung nach einem der Ansprüche 10 bis 15,
**dadurch gekennzeichnet,**
**dass** die Umkehrstation zum Drehen um eine horizontale Achse angeordnet ist.

17. Vorrichtung nach einem der Ansprüche 10 bis 16,
**dadurch gekennzeichnet,**
**dass** die Umkehrstation eine Rückhalteeinrichtung für ein Käsefass und für ein Übertragungsfass aufweist.

18. Vorrichtung nach Anspruch 17,
**dadurch gekennzeichnet,**
**dass** die Rückhalteeinrichtung eine Klemmeinrichtung aufweist.

19. Vorrichtung nach Anspruch 17 oder 18,
**dadurch gekennzeichnet,**
**dass** die Rückhalteeinrichtung schienenähnliche Elemente aufweist, die um Flansche eines Käsefasses und/oder eines Übertragungsfasses greifen können.

20. Vorrichtung nach Anspruch 9,
**dadurch gekennzeichnet,**
**dass** eine Übertragungseinrichtung zum Entfernen des beweglichen Bodens mit dem daraufliegenden Molkeblock von einem Übertragungsfass und zum Platzieren in einem Käsefass angeordnet ist.

21. Vorrichtung nach Anspruch 20,
**dadurch gekennzeichnet,**
**dass** die Übertragungseinrichtung einen Zylinder aufweist, der mit einem Kolben versehen ist, wobei der Zylinder angeordnet ist, um den beweglichen Boden zu stützen und um ihn von dem Übertragungsfass in ein Käsefass herunter zu bewegen, das unter dem Übertragungsfass platziert ist.

22. Vorrichtung nach Anspruch 21,
**dadurch gekennzeichnet,**
**dass** der bewegliche Boden nach der Übertragung zu einem Käsefass den Boden des Käsefasses bildet.

23. Vorrichtung zum Bilden von Molkenblöcken und zum Entladen derselben in Käsefässer, aufweisend eine Trocknungseinrichtung mit einer oder mehreren Entwässerungskolonnen, welche jeweils eine oder mehrere Entwässerungsröhren aufweisen,
**gekennzeichnet durch** eine Vorrichtung zum Übertragen von Molkenblöcken nach einem der Ansprüche 8 bis 22.

24. Vorrichtung nach Anspruch 23,
**dadurch gekennzeichnet,**
**dass** ein Nebenweg zum Zurückführen geleerter Übertragungsfässer vorgesehen ist.

25. Vorrichtung nach Anspruch 24,
**dadurch gekennzeichnet,**
**dass** der Nebenweg über eine Reinigungsstation führt.

26. Vorrichtung nach Anspruch 8,
**dadurch gekennzeichnet,**
**dass** der Behälter ein Käsefass mit einem beweglichen Boden ist, welches Käsefass einen Teil einer Anzahl von ähnlichen Käsefässern bildet, die aufeinanderfolgend zu einer Entwässerungskolonne mittels einer geeigneten Zuführeinrichtung zugeführt werden, um jedes mit einem Molkeblock direkt unter der Entwässerungskolonne gefüllt zu werden, und welche nachdem sie gefüllt sind jeweils mittels einer geeigneten Entladeeinrichtung zu wenigstens einer Verarbeitungsstation zum weiteren Bearbeiten des Molkeblockes gefördert werden, während der Molkeblock in dem Käsefass auf dem beweglichen Boden des Käsefasses liegt.

27. Vorrichtung nach Anspruch 26,
**dadurch gekennzeichnet,**
**dass** die Zuführeinrichtung und die Entladeeinrichtung durch ein kontinuierliches Fördermittel gebildet werden.

## Revendications

1. Procédé de transfert d'un bloc de lait caillé obtenu d'une colonne d'égouttage à une boîte à fromage, qui comprend la descente périodique d'une colonne de lait caillé présente dans la colonne d'égouttage dans un boîtier à l'aide d'un organe de support, la coupe d'un bloc de lait caillé du côté inférieur de la colonne de lait caillé, et le déplacement du boîtier avec le bloc de lait caillé en direction latérale,
**caractérisé par** l'utilisation d'un organe de support qui a un fond qui peut être déplacé verticalement et qui coopère avec le boîtier de manière que le boîtier, après avoir été rempli d'un bloc de lait caillé, puisse être déplacé latéralement alors que le bloc de lait caillé reste sur le fond mobile pendant le déplacement.

2. Procédé selon la revendication 1, **caractérisé en ce que** le boîtier est un réservoir de transfert ayant un fond qui peut être déplacé verticalement, et **en ce que** le réservoir de transfert, après avoir été rempli du bloc de lait caillé, est déplacé latéralement en position de transfert à un poste de transfert, le bloc de lait caillé restant sur le fond mobile pendant ce déplacement.

3. Procédé selon la revendication 2, **caractérisé en ce que** le poste de transfert est un poste de retournement, **en ce que**, au poste de retournement qui se trouve au-dessus de la position de transfert du réservoir de transfert, une boîte à fromage est placée en position retournée, **en ce que** le fond du réservoir de transfert est déplacé vers le haut jusqu'à ce que le bloc de lait caillé s'étende au moins partiellement dans la boîte à fromage, **en ce que** ensuite le poste de retournement est tourné autour d'un axe horizontal jusqu'à ce que la boîte à fromage occupe une position normale, puis la boîte à fromage est évacuée, **en ce que** le poste de retournement et le fond de réservoir de transfert sont ramenés en position initiale, et **en ce que** finalement le réservoir de transfert est retiré du poste de retournement.

4. Procédé selon la revendication 2 ou 3, **caractérisé en ce que** le réservoir de transfert est ramené à une colonne d'égouttage par un dispositif de dérivation du poste de retournement.

5. Procédé selon la revendication 2, **caractérisé** en que, au poste de transfert, le bloc de lait caillé disposé sur le fond mobile est transféré à un réservoir de fromage prêt, et en ce que le réservoir de fromage ayant le bloc de lait caillé placé à l'intérieur sur le fond mobile est alors évacué du poste de transfert et le réservoir de transfert est ramené vers la colonne d'égouttage.

6. Procédé selon la revendication 5, **caractérisé en ce que** le fond mobile de transfert d'un bloc de lait caillé d'un réservoir de transfert à une boîte à fromage est descendu du réservoir de transfert à la boîte à fromage sans fond présente sous le réservoir de transfert.

7. Procédé selon la revendication 1, **caractérisé en ce que** le boîtier utilisé est une boîte à fromage ayant un fond mobile qui est remplie d'un bloc de lait caillé directement sous la colonne d'égouttage, la boîte à fromage faisant partie d'un certain nombre de boîtes à fromage analogues qui sont transmises successivement à une colonne d'égouttage et qui, après avoir été remplies d'un bloc de lait caillé, sont transportées chacun par un dispositif convenable de transport à au moins un poste de transfert pour subir un traitement supplémentaire du bloc de lait caillé, le bloc de lait caillé restant toujours supporté par le fond mobile d'une boîte à fromage.

8. Appareil de transfert d'un bloc de lait caillé obtenu d'une colonne d'égouttage à une boîte à fromage, qui comporte l'abaissement périodique d'une colonne de lait caillé présente dans la colonne d'égouttage dans un boîtier à l'aide d'un organe de support, la coupe d'un bloc de lait caillé du côté inférieur de la colonne de lait caillé, et le déplacement du boîtier avec le bloc de lait caillé en direction latérale,
**caractérisé en ce que** l'organe de support comporte un fond déplacé verticalement par un vérin de dosage, et **en ce qu'**un dispositif est destiné à déplacer latéralement un boîtier rempli avec le fond mobile et un bloc de lait caillé disposé sur lui.

9. Appareil selon la revendication 8, **caractérisé en ce que** le boîtier est un réservoir de transfert ayant un fond qui peut être déplacé verticalement, et **en ce que** le dispositif de déplacement du boîtier en direction latérale est destiné à déplacer le boîtier avec le fond mobile et un bloc de lait caillé disposé sur lui en direction radiale vers une position de transfert à un poste de transfert qui comprend au moins une position de transfert.

10. Appareil selon la revendication 9, **caractérisé en ce que** le poste de transfert est un poste de retournement qui comprend un dispositif destiné à placer une boîte à fromage en position retournée au-dessus de la position de transfert, **en ce que** le poste de retournement comporte en outre un dispositif destiné à faire remonter le fond du réservoir de transfert portant un bloc de lait caillé jusqu'à ce que le bloc de lait caillé s'étende au moins partiellement dans la boîte à fromage, et **en ce qu'**un dispositif de rotation est destiné à placer le poste de retournement en position retournée avec la boîte à fromage au-dessous et le réservoir de transfert au-dessus si bien que le bloc de lait caillé peut glisser dans la boîte à fromage.

11. Appareil selon la revendication 10, **caractérisé en ce que** le dispositif destiné à faire remonter le fond du réservoir de transfert comprend un vérin monté au poste de retournement et ayant un piston agissant sur le fond du réservoir de transfert.

12. Appareil salon la revendication 11, **caractérisé en ce que** le piston comporte un dispositif de raccordement destiné à assurer un raccordement temporaire avec le fond du réservoir de transfert.

13. Appareil selon la revendication 12, **caractérisé en ce que** le dispositif de raccordement fonctionne sous vide.

14. Appareil selon la revendication 12, **caractérisé en ce que** le dispositif de raccordement assure un raccordement mécanique temporaire.

15. Appareil selon la revendication 14, **caractérisé en ce que** le dispositif de raccordement assure un accrochage à baïonnette.

16. Appareil selon l'une quelconque des revendications 10 à 15, **caractérisé en ce que** le poste de retournement est destiné à tourner autour d'un axe horizontal.

17. Appareil selon l'une quelconque des revendications 10 à 16, **caractérisé en ce que** le poste de retournement comprend un dispositif de retenue d'une boîte à fromage et d'un réservoir de transfert.

18. Appareil selon la revendication 17, **caractérisé en ce que** le dispositif de retenue comporte un dispositif de serrage.

19. Appareil selon la revendication 17 ou 18, **caractérisé en ce que** le dispositif de retenue comprend des organes analogues à des rails qui peuvent coopérer autour de flasques d'une boîte à fromage et/ou d'un réservoir de transfert.

20. Appareil selon la revendication 9, **caractérisé par** un dispositif de transfert destiné à retirer le fond mobile avec le bloc de lait caillé en appui sur lui d'un réservoir de transfert et à le placer dans une boîte à fromage.

21. Appareil selon la revendication 20, **caractérisé en ce que** le dispositif de transfert comporte un vérin ayant un piston, le vérin étant destiné à supporter le fond mobile et à le faire descendre du réservoir de transfert dans la boîte à fromage placée sous le réservoir de transfert.

22. Appareil selon la revendication 21, **caractérisé en ce que** le fond mobile, après le transfert à une boîte à fromage, forme le fond de la boîte à fromage.

23. Appareil de formation de blocs de lait caillé et d'évacuation de ceux-ci dans des boîtes à fromage, comprenant un appareil d'égouttage ayant une ou plusieurs colonnes d'égouttage comprenant chacune un ou plusieurs tubes d'égouttage, **caractérisé par** un appareil de transfert de blocs de lait caillé tel que décrit en référence à l'une des revendications 8 à 22.

24. Appareil selon la revendication 23, **caractérisé par** une dérivation destinée à ramener les réservoirs de transfert vides.

25. Appareil selon la revendication 24, **caractérisé en ce que** la dérivation conduit le long d'un poste de nettoyage.

26. Appareil selon la revendication 8, **caractérisé en ce que** le boîtier est une boîte à fromage ayant un fond mobile, la boîte à fromage faisant partie d'un certain nombre de boîtes à fromage analogues qui sont transmises successivement à une colonne d'égouttage par un dispositif convenable d'alimentation, et destinées chacune à être remplie d'un bloc de lait caillé directement sous la colonne d'égouttage, et qui, après avoir été remplies, sont transportées chacune par un dispositif convenable d'évacuation vers au moins un poste de traitement assurant un traitement supplémentaire du bloc de lait caillé, alors que le bloc de lait caillé est en appui dans la boîte à fromage sur le fond mobile de la boîte à fromage.

27. Appareil selon la revendication 26, **caractérisé en ce que** le dispositif d'alimentation et le dispositif d'évacuation sont formés par un transporteur continu.
